# EUROPEAN PATENT APPLICATION

(11) **EP 4 319 305 A1**
(43) Date of publication of application: **07.02.2024**
(21) Application number: 21934950.3
(22) Date of filing: 31.03.2021
(51) Int. Cl.: H04W 36/14, H04W 36/26, H04W 36/30, H04W 48/18

(54) **WIRELESS COMMUNICATION DEVICE AND COMMUNICATION METHOD**

(71) Applicant: Sony Group Corporation, Tokyo 108-0075 (JP)
(72) Inventor: GOTO, Jungo, Tokyo 140-0002 (JP)
(74) Representative: 2SPL Patentanwälte PartG mbB
(86) International application number: PCT/JP2021/013965
(87) International publication number: WO 2022/208785

(57) **Abstract**

A wireless communication device (10, 10A) includes a first wireless communication unit (111), a second wireless communication unit (112), and a control unit (130). The first wireless communication unit (111) performs communication by connecting to a first communication network that permits connection in a predetermined area. The second wireless communication unit (112) performs communication by connecting to a second communication network different from the first communication network. The control unit (130) predicts communication quality of communication by the first wireless communication unit (111), and determines whether or not to perform communication by the second wireless communication unit (112) based on whether or not the predicted communication quality satisfies a desired communication quality.

## Description

### Field

The present invention relates to a wireless communication device and a communication method. Background

The next generation mobile communication systems that can be used by various entities according to regional and individual needs have been developed. The next generation mobile communication system includes, for example, a mechanism in which various entities such as local companies and local governments and the like can flexibly construct and use a private network in a spot manner in a predetermined area such as a building or a site thereof, separately from 5G service for the whole country (public network) by mobile phone carriers. The predetermined area may include a terminal device that can be connected to both the private network and the public network.

On the other hand, there is a technique for appropriately determining a search threshold corresponding to carrier aggregation and performing cell search and quality measurement when a terminal device can communicate through a plurality of carriers at the same time by carrier aggregation.

### Citation List

### Patent Literature

Patent Literature 1: JP 2014-241609 A

### Summary

### Technical Problem

However, in the above-described technology, a terminal device capable of performing communication through a plurality of carriers performs cell search, and it is assumed that the terminal device communicates with one network.

As described above, in the conventional technology, it is not assumed that a wireless communication device (for example, a terminal device) is connected to a plurality of different networks such as the private network and the public network. Therefore, in a case where the wireless communication device can be connected to a plurality of networks, there is a demand for a mechanism where the wireless communication device can perform communication that satisfies a desired communication quality (QoS: Quality of Service) more continuously.

Therefore, the present disclosure provides a mechanism in which a wireless communication device capable of connecting to a plurality of networks can perform communication that satisfies a desired communication quality more continuously.

Note that the above problem or object is merely one of a plurality of problems or objects that can be solved or achieved by the plurality of embodiments disclosed in the present specification.

### Solution to Problem

According to the present disclosure, a wireless communication device is provided. The wireless communication device includes a first wireless communication unit, a second wireless communication unit, and a control unit. The first wireless communication unit performs communication by connecting to a first communication network that permits connection in a predetermined area. The second wireless communication unit performs communication by connecting to a second communication network different from the first communication network. The control unit predicts communication quality of communication by the first wireless communication unit, and determines whether or not to perform communication by the second wireless communication unit based on whether or not the predicted communication quality satisfies a desired communication quality.

### Brief Description of Drawings

FIG. 1 is a diagram illustrating a configuration example of a communication system according to a proposed technology of the present disclosure.
FIG. 2 is a diagram for describing an outline of communication processing according to the proposed technology of the present disclosure.
FIG. 3 is a block diagram illustrating an example of a configuration of a terminal device according to the first embodiment of the present disclosure.
FIG. 4 is a flowchart illustrating an example of switching processing to a public network according to the first embodiment of the present disclosure.
FIG. 5 is a flowchart illustrating an example of switching processing to a private network according to the first embodiment of the present disclosure.
FIG. 6 is a block diagram illustrating a configuration example of a terminal device according to the second embodiment of the present disclosure.
FIG. 7 is a flowchart illustrating an example of switching processing to a non-priority NW according to the second embodiment of the present disclosure.

### Description of Embodiments

Hereinafter, embodiments of the present disclosure will be described in detail with reference to the accompanying drawings. Note that, in the present specification and the drawings, components having substantially the same functional configuration are denoted by the same reference numerals, and redundant description is omitted.

Furthermore, in the present specification and the drawings, similar components of the embodiments may be distinguished by adding different alphabets or numbers after the same reference numerals. However, in a case where it is not necessary to particularly distinguish each of similar components, only the same reference numeral is assigned.

One or more embodiments (including examples, and modifications) described below can each be implemented independently. On the other hand, at least part of the plurality of embodiments described below may be appropriately combined with at least part of other embodiments. The plurality of embodiments may include novel features different from each other. Therefore, the plurality of embodiments can contribute to different objects or solving different problems, and can exhibit different advantageous effects.

### <<1. Introduction>>

As described above, the next generation mobile communication systems that can be used by various entities according to regional and individual needs have been developed. The next generation mobile communication system includes, for example, a mechanism in which various entities such as local companies and local governments and the like can flexibly construct and use a private network in a spot manner in a predetermined area such as a building or a site thereof, separately from 5G service for the whole country (public network) by mobile phone carriers.

In the conventional mobile communication system (cellular system), a plurality of cells are arranged such that an area of each cell overlays. Thus, in the conventional cellular system, a network design capable of performing communication anywhere is performed.

In particular, in a public network using a licensed band, a large number of terminal devices are accommodated in a large number of cells. For example, when a large number of terminal devices are concentrated in one cell provided by one base station device, the base station device performs scheduling (resource allocation) in consideration of fairness between the terminal devices in the cell.

As a result, the communication speed of each terminal device varies due to external factors such as the number of terminal devices accommodated in the cell, the traffic volume, and the frequency of traffic occurrence.

On the other hand, for example, in a private network using a licensed band (hereinafter, also simply referred to as a private network) such as the local 5G, a cell is configured only in a licensed place. In the private network, a cell accommodates a terminal device permitted to be connected to the private network in the area.

Therefore, in the private network, by limiting the number of terminal devices to be connected or performing scheduling based on the type of terminal device, it is possible to suppress a variation in communication speed due to external factors in the public network.

Furthermore, the terminal device connected to the private network can achieve wide area coverage by utilizing roaming to the public network.

### <1.1. Example of communication system>

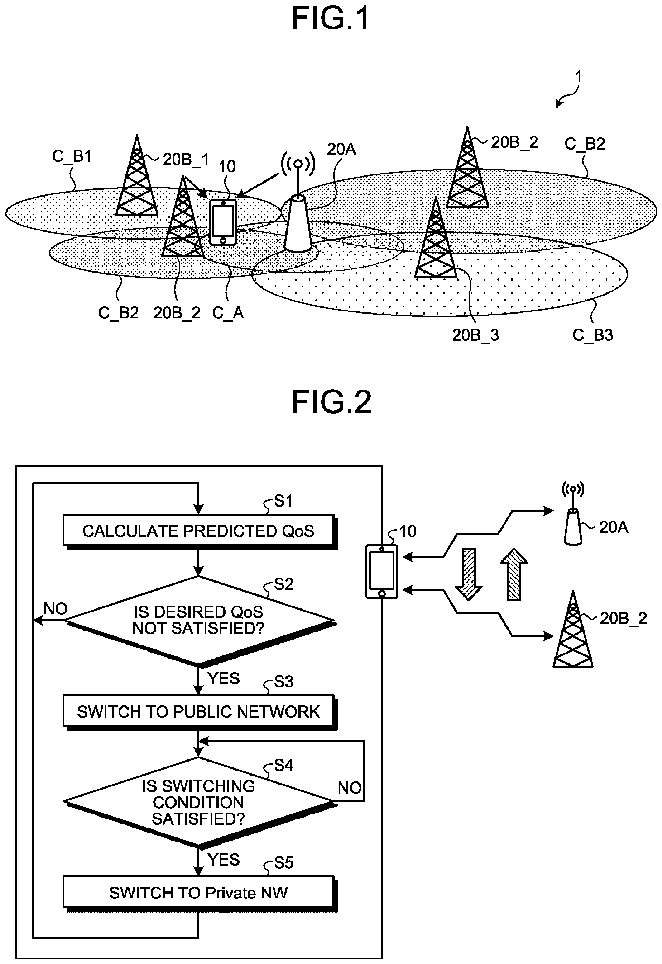

Here, an outline of a communication system 1 according to the proposed technology of the present disclosure will be described. FIG. 1 is a diagram illustrating a configuration example of the communication system 1 according to the proposed technology of the present disclosure.

The communication system 1 illustrated in FIG. 1 includes a terminal device 10 and base station devices 20A and 20B.

### (1) Base station device 20A

The base station device 20A is included in a private network system and provides a private network service to a subordinate device. Here, the private network system according to the present embodiment is a system that provides a service using a licensed band (for example, a first frequency band f1) within a predetermined area determined in advance. The base station device 20A is a base station device of a local 5G system. The base station device 20A performs wireless communication with a device (for example, the terminal device 10) located inside a cell C_A of the base station device 20A. The base station device 20A transmits a downlink signal to the terminal device 10 and receives an uplink signal from the terminal device 10.

FIG. 1 illustrates a case where one base station device 20A is included in the private network system; however, the applicable case is not limited thereto. For example, a plurality of base station devices 20A may be included in the private network system.

In this case, the base station device 20A is logically connected to the other base station devices 20A (not illustrated) by, for example, an X2 interface or an Xn interface, and can transmit and receive control information and the like relative to the other base station devices 20A. The base station device 20A is logically connected to a so-called core network (not illustrated) by, for example, an S1 interface or an NG interface, and can transmit and receive control information and the like. Note that communication between these devices can be physically relayed by various devices.

### (2) Base station device 20B

The base station device 20B is a communication device that is included in the public network system and provides the public network service to a subordinate device. For example, the base station device 20A is a base station device of a cellular system. The wireless communication is performed with a device (for example, the terminal device 10) located inside a cell C_B of the base station device 20B. The base station device 20B transmits a downlink signal to the terminal device 10 and receives an uplink signal from the terminal device 10.

The base station device 20B is logically connected to the other base station devices 20B by, for example, an X2 interface, and can transmit and receive control information and the like. Furthermore, the base station device 20B is logically connected to a so-called core network (not illustrated) by, for example, an S1 interface, and can transmit and receive control information and the like. Note that communication between these devices can be physically relayed by various devices.

As described above, the public network is a network capable of performing communication anywhere. Therefore, in the public network system, a plurality of cells (base station devices 20B) are arranged so as to satisfy planar coverage under a condition that out-of-band radiation is lower than a predetermined level.

In addition, a plurality of operators can each provide different public network services. As described above, the number of public networks is not limited to one, and the terminal device 10 can be connected to a plurality of public networks. For example, in FIG. 1, a base station device 20B_1, a base station device 20B_2, and a base station device 20_3 may each belong to different public network systems. In this case, the base station devices 20B_1 to 20B_3 each communicate with a subordinate device using different frequency bands (the second frequency band f2 to the fourth frequency band f4). In the example of FIG. 1, it is illustrated that the terminal device 10 performs communication using the second frequency band f2 with the base station device 20B_1 and communication using the third frequency band f3 with the base station device 20B_2.

### (3) Terminal device 10

The terminal device 10 is a wireless communication device capable of performing communication in the private network system. The terminal device 10 performs wireless communication with the base station device 20A of the private network system. That is, the terminal device 10 is connected to the private network (an example of a first communication network) and performs wireless communication via the base station device 20A. For example, the terminal device 10 receives a downlink signal from the base station device 20A and transmits an uplink signal to the base station device 20A.

In addition, the terminal device 10 is a wireless communication device capable of performing communication in the public network system. The terminal device 10 performs wireless communication with the base station device 20B of the public network system. That is, the terminal device 10 is connected to the public network (an example of a second communication network) and performs wireless communication via the base station device 20B. For example, the terminal device 10 receives a downlink signal from the base station device 20B and transmits an uplink signal to the base station device 20B.

Furthermore, the terminal device 10 is not limited to a so-called user equipment (UE), and for example, a so-called low cost terminal (low cost UE) such as an MTC terminal, an enhanced MTC (eMTC) terminal, an NB-IoT terminal, or the like may be applied. In addition, an infrastructure terminal such as a road side unit (RSU) or a terminal such as customer premises equipment (CPE) may be applied.

### <1.2. Problem>

As described above, in the private network system using the licensed band, for example, the base station device 20A manages the terminal device 10 to be connected, and can perform scheduling for guaranteeing the communication speed and the maximum delay within the coverage based on the type of the terminal device 10.

However, in the private network using the licensed band, the license is granted by limiting a place (such as within an owned land or building). Therefore, it is necessary to suppress interference to an area other than the licensed area, and there is a problem that the electric field strength becomes weak at the boundary (cell edge) with the non-licensed area, and it is difficult to guarantee the communication speed and the maximum delay.

As described above, since the private network system is operated by limiting the area, it is necessary to set the interference to the outside of the licensed area to a predetermined level or less, and it is assumed that the communication quality becomes very poor at the edge of coverage (cell edge) as compared with the public network.

In the case of a device that can be connected to both the private network and the public network such as the terminal device 10 described above, a method of roaming from the private network to the public network at the cell edge is considered. In this case, since it takes time to switch from the private network to the public network, there is a problem that the communication quality (QoS) is not satisfied in the communication in a case where traffic requiring a low delay or continuous communication is required.

As described above, there is a demand for a mechanism in which a wireless communication device (for example, the terminal device 10) capable of connecting to a plurality of networks (for example, the private network and the public network) can continuously perform communication satisfying QoS between the plurality of networks. For example, there is a demand for a mechanism in which the terminal device 10 can perform communication that continuously satisfies desired QoS in a case where the connection destination of the terminal device 10 is switched from the private network to the public network.

### <1.3. Outline of proposed technology>

Therefore, in the proposed technology of the present disclosure, in a case of connecting to the private network, the terminal device 10 predicts communication quality (QoS) and determines whether or not to switch to the public network according to the predicted communication quality (hereinafter, also referred to as predicted QoS). As described above, by switching the plurality of networks according to the predicted QoS, the terminal device 10 can switch the connection destination network before the actual QoS (hereinafter, also referred to as actual QoS) does not satisfy the desired QoS (hereinafter, also referred to as desired QoS).

Here, an outline of communication processing according to the proposed technology of the present disclosure will be described with reference to FIG. 2. FIG. 2 is a diagram for describing the outline of communication processing according to the proposed technology of the present disclosure.

It is assumed that the terminal device 10 illustrated in FIG. 2 is connected to the private network and performs communication with the base station device 20A.

In this case, the terminal device 10 calculates predicted QoS of communication with the base station device 20A (step S1). For example, the terminal device 10 estimates QoS after a lapse of a predetermined period from the current time as predicted QoS, according to the change of the actual QoS and the actual QoS before the current time.

Next, the terminal device 10 determines whether or not the predicted QoS satisfies the desired QoS (step S2). In a case where the desired QoS is satisfied (step S2; No), the process returns to step S1.

On the other hand, in a case where the predicted QoS does not satisfy the desired QoS (step S2; Yes), the terminal device 10 switches the connection destination from the private network to the public network (step S3). For example, the terminal device 10 performs communication with the base station device 20B_2 whose QoS in communication using the public network as a connection destination satisfies the desired QoS, thereby switching the connection destination from the private network to the public network.

The terminal device 10 connected to the public network and performing communication with the base station device 20B determines whether or not a switching condition from the public network to the private network is satisfied (step S4). For example, the terminal device 10 measures the communication quality with the base station device 20A, and determines whether or not the switching condition is satisfied according to whether or not the measured communication quality satisfies the desired quality.

For example, in a case where the communication quality with the private network does not satisfy the desired communication quality and does not satisfy the switching condition (step S4; No), the process returns to step S4, and the terminal device 10 continues to determine whether or not the switching condition is satisfied. In this manner, the terminal device 10 periodically performs determination until the switching condition is satisfied.

On the other hand, for example, in a case where the communication quality with the private network satisfies the desired communication quality, that is, in a case where the switching condition is satisfied (step S4; Yes), the terminal device 10 switches the connection destination from the public network to the private network (NW) (step S5). As a result, the terminal device 10 performs communication with the base station device 20A.

As described above, by switching the connection destination from the private network to the public network according to the predicted QoS, the terminal device 10 can switch the connection destination from the private network to the public network before the actual QoS does not satisfy the desired QoS. As a result, the terminal device 10 can continuously perform communication that satisfies the actual QoS.

Furthermore, in a case where the communication quality with the private network satisfies the desired communication quality, the terminal device 10 switches the connection destination from the public network to the private network regardless of the communication quality with the public network. As a result, the terminal device 10 can preferentially set the private network with more stable communication as the connection destination.

### <<2. First embodiments

A method where the terminal device 10 connects to a plurality of networks includes a method of selecting one of the plurality of networks and connecting to the selected network, for example, single SIM single standby (SSSS) or dual SIM single standby (DSSS).

Hereinafter, a case where the terminal device 10 performs communication by connecting to either the private network or the public network by SSSS or DSSS will be described as the first embodiment.

### <2.1. Configuration example of terminal device>

First, a configuration example of the terminal device 10 according to the first embodiment will be described.

The terminal device 10 is a wireless communication device that wirelessly communicates with other communication devices such as the base station device 20. The terminal device 10 is, for example, a mobile phone, a smart device (a smartphone or a tablet), a personal digital assistant (PDA), or a personal computer. In addition, the terminal device 10 may be an imaging device (for example, a camcorder) having a communication function, or may be a motorcycle, a moving relay vehicle, or the like on which a communication device such as a field pickup unit (FPU) is mounted. Furthermore, the terminal device 10 may be a machine to machine (M2M) device or an Internet of things (IoT) device. The terminal device 10 may be a router having a plurality of communication paths.

Furthermore, the terminal device 10 may be capable of low power wide area (LPWA) communication with other communication devices (for example, the base station device 20). Furthermore, the wireless communication used by the terminal device 10 may be wireless communication using millimeter waves. Note that the wireless communication used by the terminal device 10 may be wireless communication using radio waves or wireless communication (optical wireless) using infrared rays or visible light.

Furthermore, the terminal device 10 may be a moving body device. The moving body device is a mobile wireless communication device. At this time, the terminal device 10 may be a wireless communication device installed in a moving body or may be a moving body itself. For example, the terminal device 10 may be a vehicle that moves on a road such as an automobile, a bus, a truck, a motorcycle, or the like, or a wireless communication device mounted on such the vehicle. Note that the moving body may be a mobile terminal, or may be a moving body that moves on land, in the ground, over water, or under water. Furthermore, the moving body may be a moving body that moves inside the atmosphere, such as a drone, a helicopter, or the like, or may be a moving body that moves outside the atmosphere, such as an artificial satellite.

The terminal device 10 may performs communication by simultaneously connecting to a plurality of base station devices 20 or a plurality of cells. For example, in a case where one base station device 20 supports a communication area via the plurality of cells (for example, pCell, sCell), it is possible to bundle the plurality of cells and communicate between the base station device 20 and the terminal device 10 by a carrier aggregation (CA) technology, a dual connectivity (DC) technology, or a multi-connectivity (MC) technology. Alternatively, the terminal device 10 and the plurality of base station devices 20 can communicate with each other by a coordinated multi-point transmission and reception (CoMP) technology via cells of different base station devices 20.

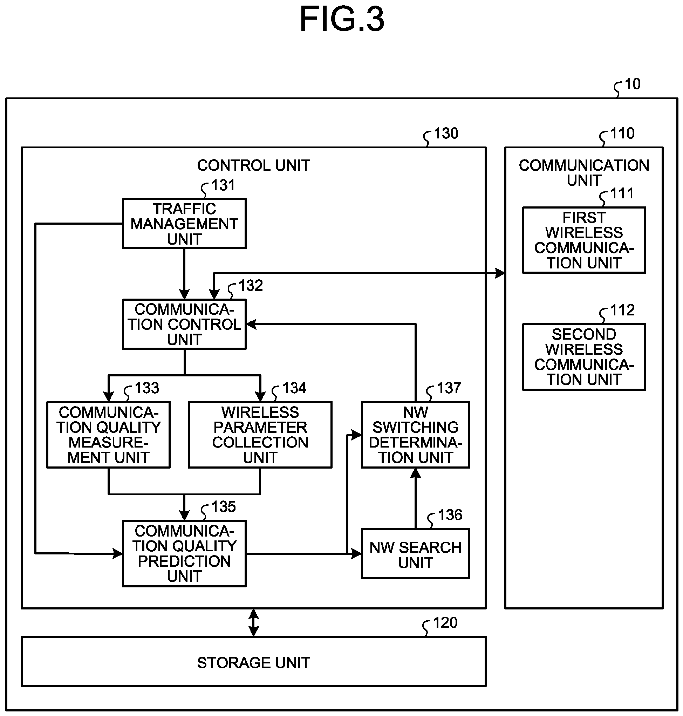

FIG. 3 is a block diagram illustrating an example of a configuration of the terminal device 10 according to the first embodiment of the present disclosure. Referring to FIG. 3, the terminal device 10 includes a communication unit 110, a storage unit 120, and a control unit 130. Note that the configuration illustrated in FIG. 3 is a functional configuration, and the hardware configuration may be different from the functional configuration. Furthermore, the functions of the terminal device 10 may be implemented in a distributed manner in a plurality of physically separated configurations.

### (1) Communication unit 110

The communication unit 110 is a communication interface for communicating with another device, and includes first and second wireless communication units 111 and 112. The first wireless communication unit 111 is a communication interface for communicating with another device. For example, the first wireless communication unit 111 is a network interface. The first wireless communication unit 111 is a communication unit that performs wireless communication by being connected to the public network.

The second wireless communication unit 112 is a communication interface for communicating with another device. For example, the second wireless communication unit 112 is a network interface. The second wireless communication unit 112 is a communication unit that performs wireless communication by being connected to the private network.

The communication unit 110 communicates with the base station device 20 using one of the first and second wireless communication units 111 and 112 in accordance with an instruction from the control unit 130. For example, in a case where the communication unit 110 performs wireless communication using the first wireless communication unit 111, the communication unit 110 performs communication with the base station device 20B (see FIG. 1). Furthermore, in a case where the communication unit 110 performs wireless communication using the second wireless communication unit 112, the communication unit 110 performs communication with the base station device 20A (see FIG. 1).

Here, it is assumed that the communication unit 110 performs communication by switching a plurality of wireless communication units, but communication may be performed by connecting to a plurality of networks using one wireless communication unit.

### (2) Storage unit 120

The storage unit 120 is a storage device capable of reading and writing data, such as a DRAM, an SRAM, a flash memory, a hard disk, or the like. The storage unit 120 functions as a storage means of the terminal device 10.

### (3) Control unit 130

The control unit 130 is a controller that controls each unit of the terminal device 10. The control unit 130 is implemented by, for example, a processor such as a CPU, an MPU or the like. For example, the control unit 130 is implemented by a processor executing various programs stored in the storage device inside the terminal device 10 using a RAM or the like as a work area. Note that the control unit 130 may be implemented by an integrated circuit such as an ASIC or an FPGA. Any of the CPU, the MPU, the ASIC, and the FPGA can be regarded as a controller. Furthermore, the control unit 130 may be implemented by a GPU in addition to or instead of the CPU.

The control unit 130 includes a traffic management unit 131, a communication control unit 132, a communication quality measurement unit 133, a wireless parameter collection unit 134, a communication quality prediction unit 135, a network (NW) search unit 136, and an NW switching determination unit 137. Each block (the traffic management unit 131 to the NW switching determination unit 137) constituting the control unit 130 is a functional block indicating a function of the control unit 130. These functional blocks may be software blocks or hardware blocks. For example, each of the functional blocks described above may be one software module implemented by software (including micro-programs), or may be one circuit block on a semiconductor chip (die). Of course, each functional block may be one processor or one integrated circuit. The control unit 130 may be configured by a functional unit different from the above-described functional block. Any configuration method of the functional block may be applied.

### (Traffic management unit 131)

The traffic management unit 131 manages traffic (uplink data) generated in the terminal device 10 and traffic (downlink data) received from the base station device 20. For example, the traffic management unit 131 outputs the uplink data to be transmitted to the base station device 20 to the communication control unit 132. The traffic management unit 131 receives the downlink data received from the base station device 20 from the communication control unit 132.

In addition, the traffic management unit 131 manages the communication quality (for example, the desired QoS) required for the traffic and notifies the communication control unit 132 and the communication quality prediction unit 135 of the desired QoS.

Here, the communication quality managed by the traffic management unit 131 will be described with reference to Table 1. Table 1 is a table for describing an example of a relationship between a type of traffic and required QoS (desired QoS).

**Table 1**

| Traffic | QoS-1 | QoS-2 | QoS-3 | QoS-4 | QoS-5 |
|---|---|---|---|---|---|
| Live streaming 1 | UL 80Mbps | DL 1Mbps | Latency 10msec | Jitter 20msec | Error rate 10⁻² |
| Live streaming 2 | UL 200Mbps | DL 50Mbps | Latency 30msec | Jitter 90msec | Error rate 10⁻² |
| Remote control | UL 3Mbps | DL 3Mbps | Latency 2msec | - | Error rate 10⁻⁵ |
| VR | UL 1Mbps | DL 200Mbps | Latency 10msec | Jitter 20msec | Error rate 10⁻² |

The traffic management unit 131 manages the communication quality of traffic based on the correspondence information between the type of traffic and the desired QoS as illustrated in Table 1. The correspondence information as shown in Table 1 is stored in the storage unit 120, for example.

For example, "QoS-1" in Table 1 is an index indicating a desired throughput in the uplink. When the traffic is "Live streaming 1", and the "QoS-1" indicates "UL 80 Mbps". This indicates that when the traffic is "Live streaming 1", a throughput of 80 Mbps or more is required in the uplink.

"QoS-2" in Table 1 is an index indicating a desired throughput in the downlink. When the traffic is "Live streaming 2", and the "QoS-2" indicates "DL 80 Mbps". This indicates that when the traffic is "Live streaming 2", a throughput of 1 Mbps or more is required in the downlink.

"QoS-3" in Table 1 is an index indicating a delay. When the traffic is "Remote control", the "QoS-3" indicates "Latency 2 msec". This indicates that when the traffic is "Remote control", the allowable delay time is 2 msec or less.

"QoS-4" in Table 1 is an index indicating jitter. When traffic is "Virtual Reality (VR)", the "QoS-4" indicates "Jitter 20 msec". This indicates that when the traffic is "VR", the allowable jitter is 20 msec or less.

"QoS-5" in Table 1 is an index indicating an error rate. When the traffic is "Live streaming 1", the "QoS-5" indicates "error rate 10⁻²". This indicates that when the traffic is "Live streaming 1", the error rate is required to be 10⁻² or less.

As described above, the traffic management unit 131 manages the desired QoS for each traffic type based on the correspondence information between the traffic type and the desired QoS stored in the storage unit 120.

Note that the desired QoS corresponding to the traffic does not need to include all the indexes shown in Table 1. For example, as shown in Table 1, "QoS-4" corresponding to "Remote control" is not defined. In this manner, the traffic management unit 131 manages at least some indexes illustrated in Table 1 as the desired QoS corresponding to the traffic. Alternatively, the traffic management unit 131 may manage an index other than the index illustrated in Table 1 as the desired QoS.

In addition, the traffic type illustrated in Table 1 is an example, and types other than the traffic type illustrated in Table 1 may be included in the correspondence information. For example, in a case where the traffic is video data, the desired QoS can be managed according to resolution, fps, a video compression method, and the like.

The delay (latency) of "QoS-3" illustrated in Table 1 may be defined as a value of round trip time (RRT) or may be defined as a delay of 1 way. Note that, in a case where the delay of 1 way is used as an index of the "QoS-3", it is assumed that highly accurate time synchronization is performed between the network and the terminal device 10. In this case, for example, it is assumed that the delay time in the uplink is fed back from the network side to the terminal device 10. In addition, the delay time in the downlink is fed back from the terminal device 10 to the network side.

The error rate of the "QoS-5" illustrated in Table 1 is an index indicating the reliability of communication, and may be defined as an error rate of first transmission or may be defined as an error rate when retransmission is performed a predetermined number of times.

### (Communication control unit 132)

The communication control unit 132 illustrated in FIG. 3 controls the communication unit 110 to perform wireless communication with the base station device 20. In a case of performing communication by connecting to the public network, the communication control unit 132 controls the first wireless communication unit 111 to perform communication with the base station device 20B. In a case of performing communication by connecting to the private network, the communication control unit 132 controls the second wireless communication unit 112 to perform communication with the base station device 20A.

For example, the communication control unit 132 selects one of the public network and the private network as the network to be connected according to the determination result of the NW switching determination unit 137.

The communication control unit 132 notifies the communication quality measurement unit 133 of information regarding the communication quality. Furthermore, the communication control unit 132 notifies the wireless parameter collection unit 134 of information regarding the wireless parameter.

### (Communication quality measurement unit 133)

The communication quality measurement unit 133 measures the communication quality with the network performing communication based on the information regarding the communication quality acquired from the communication control unit 132. The information regarding the communication quality may include, for example, the information below.
- RSRP (Reference Signal Received Power)
- RSRQ (Reference Signal Received Quality)
- Signal to Interference plus Noise Ratio (SINR) or Signal-Noise Ratio (SNR)
- RSSI (Received Signal Strength Indicator)
- pathloss
- Error rate (for example, downlink/uplink BLock Error Ratio (BLER))

Furthermore, in addition to the information described above, for example, the information regarding the communication quality may include a time and a change amount of a delay, a time and a change amount of jitter, information of a throughput (statistical values such as an average, a peak, 5%-ile, and a change amount of a throughput) that can be acquired at a superior level such as an application.

Alternatively, the information regarding the communication quality may include, for example, information regarding the moving speed, or position information of the terminal device 10.

For example, in a case where the communication control unit 132 is connected to the public network via the second wireless communication unit 112, the communication quality measurement unit 133 measures the communication quality with the public network. Furthermore, in a case where the communication control unit 132 is connected to the private network via the first wireless communication unit 111, the communication quality measurement unit 133 measures the communication quality with the private network.

The communication quality measurement unit 133 outputs the measured communication quality to the communication quality prediction unit 135.

### (Wireless parameter collection unit 134)

The wireless parameter collection unit 134 collects parameter information of wireless communication performed by the communication unit 110 via the communication control unit 132.

The parameters collected by the wireless parameter collection unit 134 include the information below, as an example.
- Bandwidth (including, for example, information on whether or not to apply carrier aggregation (CA) or dual connectivity (DC))
- Resource Block (RB) allocation information (for example, a statistical value of the past several seconds, or the like)
- Information regarding MCS table (for example, 64QAM or 256QAM)
- Information on MCS used for communication (for example, a statistical value of the past several seconds, or the like.)
- Information of uplink buffer status report (BSR)

The wireless parameter collection unit 134 outputs the collected wireless parameters to the communication quality prediction unit 135.

### (Communication quality prediction unit 135)

The communication quality prediction unit 135 predicts the communication quality of the communication unit 110 by using the communication quality measured by the communication quality measurement unit 133 and the wireless parameter collected by the wireless parameter collection unit 134.

The communication quality prediction unit 135 estimates predicted QoS as prediction of the communication quality, for example. The predicted QoS is, for example, QoS after a lapse of a predetermined period past from the current time. For example, the communication quality prediction unit 135 calculates QoS after a lapse of a predetermined period based on the change amount of the actual QoS before the current time as the predicted QoS.

The predicted QoS may be the same index as the desired QoS described using Table 1, or may be an index other than that in Table 1. Furthermore, the communication quality prediction unit 135 may estimate the predicted QoS for all the QoS indexes illustrated in Table 1, for example, and may estimate at least one index such as a delay, or the like as the predicted QoS.

For example, the communication quality prediction unit 135 may estimate a representative index obtained according to the type of traffic as the predicted QoS. For example, for traffic in which low latency is required, such as "remote control", the communication quality prediction unit 135 may estimate a delay time or jitter, such as RTT, as the predicted QoS. In addition, for traffic in which the communication speed needs to be guaranteed in at least one of the downlink and the uplink, the communication quality prediction unit 135 estimates the throughput as the predicted QoS.

For example, in a case where the communication speed is used as an index of the predicted QoS, the communication quality prediction unit 135 calculates the communication speed with the connected network as the predicted QoS. Alternatively, the communication quality prediction unit 135 may calculate the reception quality and the moving speed as the predicted QoS.

Furthermore, in a case where the terminal device 10 performs communication by connecting to the private network, the communication quality prediction unit 135 determines whether or not the communication by the communication unit 110 satisfies the desired QoS after a lapse of a predetermined period from the current time based on the predicted QoS and the desired QoS. In other words, the communication quality prediction unit 135 determines whether or not the terminal device 10 is located at the edge of the coverage after a lapse of a predetermined time from the current time, and the communication quality with the private network deteriorates.

The communication quality prediction unit 135 determines whether or not the communication by the communication unit 110 satisfies the desired QoS after a lapse of a predetermined period from the current time, for example, by determining whether or not the predicted QoS satisfies the desired QoS.

Alternatively, the communication quality prediction unit 135 may predict a timing at which the QoS cannot satisfy the desired QoS based on the predicted QoS. In a case where the predicted timing is shorter than a predetermined period, the communication quality prediction unit 135 determines that the predicted QoS does not satisfy the desired QoS after a lapse of the predetermined period.

In addition, the communication quality prediction unit 135 may determine whether or not the predicted QoS can satisfy the desired QoS continuously for a certain period.

Note that the communication quality prediction unit 135 may calculate the predicted QoS using, for example, machine learning using a measurement result by the communication quality measurement unit 133 and a wireless parameter collected by the wireless parameter collection unit 134 as inputs. The communication quality prediction unit 135 may determine whether or not the predicted QoS can satisfy the desired QoS by using, for example, machine learning using the predicted QoS as an input. Alternatively, the communication quality prediction unit 135 may determine whether or not the predicted QoS can satisfy the desired QoS by using, for example, machine learning using a measurement result by the communication quality measurement unit 133 and a wireless parameter collected by the wireless parameter collection unit 134 as inputs.

Here, the communication quality prediction unit 135 estimates the QoS after a lapse of a predetermined period from the current time as the predicted QoS. The predetermined period in this case is assumed to, for example, be a period determined beforehand. The predetermined period may be set according to, for example, the time required for switching networks by the terminal device 10. The time required for switching networks may be calculated in advance by simulation or the like, or may be calculated based on the time required for switching so far. Alternatively, the predetermined period may be changed according to the change amount of the actual QoS.

The communication quality prediction unit 135 notifies the NW search unit 136 and the NW switching determination unit 137 of the determination result.

### (NW search unit 136)

In a case where the communication quality prediction unit 135 determines that the predicted QoS does not satisfy the desired QoS, the NW search unit 136 searches for a roaming destination network. The NW search unit 136 receives band information (frequency band, bandwidth, and the like), notification information (for example, SIB1), and the like from the base station device 20B of the public network via the first wireless communication unit 111, for example, and acquires cell information or information regarding communication quality. In this manner, the NW search unit 136 performs cell search according to the determination result of the communication quality prediction unit 135.

Furthermore, in a case where the communication unit 110 performs communication by connecting to the public network, the NW search unit 136 periodically performs cell search of the private network. In this case, the NW search unit 136 receives band information (frequency band, bandwidth, and the like), notification information (for example, SIB1), and the like from the base station device 20A of the private network, and acquires cell information or information regarding communication quality.

The NW search unit 136 notifies the NW switching determination unit 137 of the cell search result.

### (NW switching determination unit 137)

The NW switching determination unit 137 determines whether or not to switch the network of the communication destination.

For example, it is assumed that, in a case where the communication unit 110 performs communication by connecting to the private network, the communication quality prediction unit 135 determines that the predicted QoS does not satisfy the desired QoS. In this case, the NW switching determination unit 137 determines whether or not to switch the connection destination from the private network to the public network according to the switching condition.

The NW switching determination unit 137 calculates QoS of the public network based on the search result of the NW search unit 136. In a case where the calculated QoS of the public network satisfies the desired QoS, the NW switching determination unit 137 determines to switch the connection destination from the private network to the public network (roaming destination). Alternatively, in a case where it is estimated that the QoS is to be improved by switching to the public network, the NW switching determination unit 137 determines to switch the connection destination from the private network to the public network (roaming destination). For example, in a case where the calculated QoS of the public network is better than the predicted QoS, the NW switching determination unit 137 determines that the QoS is to be improved by switching to the public network.

In a case where it is determined to switch the connection destination from the private network to the public network (roaming destination), the NW switching determination unit 137 notifies the communication control unit 132 to switch the connection destination. As a result, the communication control unit 132 performs communication by switching the connection destination from the private network to the public network.

Alternatively, in a case where it is determined to switch the connection destination from the private network to the public network (roaming destination), the NW switching determination unit 137 may present information for recommending switching of the connection destination to a user. In this case, the communication control unit 132 switches the connection destination in accordance with an instruction from the user.

Note that the NW switching determination unit 137 may determine whether or not roaming has been performed using the currently-used SIM, that is, whether or not roaming is performed on the public network having a roaming record. Alternatively, the NW switching determination unit 137 may determine whether to perform roaming on a predetermined public network. That is, the NW switching determination unit 137 may not determine whether or not to perform roaming for the public network that cannot perform roaming so that the public network that cannot perform roaming is not selected as the connection destination. The NW switching determination unit 137 may identify the public network by, for example, a combination (public land mobile network (PLMN)) of a country number (MCC) and a company code (MNC).

On the other hand, in a case where the communication unit 110 performs communication by connecting to the public network, the NW switching determination unit 137 determines whether or not to switch the connection destination based on the cell search result of the private network by the NW search unit 136.

In this case, the NW switching determination unit 137 calculates QoS of the private network based on the search result of the NW search unit 136. In a case where the calculated QoS of the private network satisfies the desired QoS, the NW switching determination unit 137 determines to return (switch) the connection destination from the public network (roaming destination) to the private network. Alternatively, in a case where it is estimated that the QoS is to be improved by returning to the private network, the NW switching determination unit 137 determines to return the connection destination from the public network (roaming destination) to the private network. For example, in a case where the calculated QoS of the private network is better than the predicted QoS of the public network, the NW switching determination unit 137 determines that the QoS is to be improved by returning to the private network.

In this manner, the NW switching determination unit 137 determines whether or not to return the connection destination to the private network based on the QoS (communication quality) of the private network. As a result, in a case where the communication quality of the private network is improved, the connection destination of the terminal device 10 can be returned to the private network more quickly.

### <2.2. Switching processing>

### <2.2.1. Switching processing to public network>

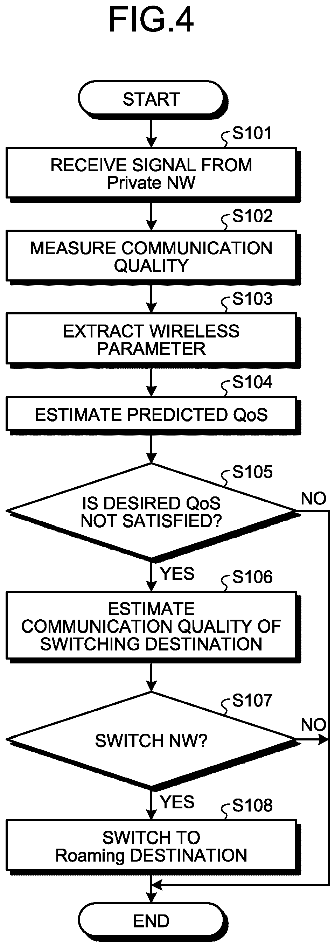

Next, switching processing to the public network executed by the terminal device 10 will be described with reference to FIG. 4. FIG. 4 is a flowchart illustrating an example of switching processing to the public network according to the first embodiment of the present disclosure. The switching processing illustrated in FIG. 4 is periodically executed by the terminal device 10 connected to the private network, for example.

As illustrated in FIG. 4, the terminal device 10 receives a signal from the private network (step S101). The terminal device 10 receives a signal from the private network via the base station device 20A.

The terminal device 10 measures the communication quality based on the received signal (step S102). The terminal device 10 measures, for example, communication quality such as RSRP.

The terminal device 10 extracts the wireless parameter from the received signal (step S103). For example, the terminal device 10 extracts the wireless parameter related to the communication quality from the control information received through PDCCH, MAC CE, RRC, or NAS.

The terminal device 10 estimates the predicted QoS based on the measured communication quality and the extracted wireless parameter (step S104). For example, the terminal device 10 estimates QoS after a lapse of a predetermined period from the current time as the predicted QoS based on the communication quality and the wireless parameter.

Subsequently, the terminal device 10 determines whether or not the predicted QoS can satisfy the desired QoS (step S105). In a case where the desired QoS can be satisfied for the predetermined period (step S105; No), the process ends.

On the other hand, in a case where the desired QoS cannot be satisfied (step S105; Yes), the terminal device 10 performs cell search and estimates the communication quality of the switching destination (step S106). The terminal device 10 performs cell search for the roaming destination network, and estimates the communication quality of the switching destination from the wireless parameter or the like that can be acquired from the received notification information (for example, SIB1).

The terminal device 10 determines whether or not to switch to the roaming destination network based on the estimated communication quality (step S107). For example, in a case where the estimated communication quality (QoS) satisfies a predetermined condition, the terminal device 10 determines to switch to the roaming destination network. The predetermined condition includes, for example, at least one of satisfying the desired QoS, and improving the communication quality by switching to the roaming destination network.

When switching to the roaming destination network is not performed (step S107; No), the process ends. On the other hand, in a case where switching to the roaming destination network is performed (step S107; Yes), the terminal device 10 switches the connection destination to the roaming destination network (public network) (step S108), and the process ends.

Note that, in a case where there is a plurality of roaming destination networks, the terminal device 10 repeatedly performs steps S106 and S107, and switches to, for example, a network (public network) having the highest communication quality. Alternatively, the terminal device 10 may switch to a network (public network) having a roaming record among the plurality of networks.

### <2.2.2. Switching processing to private network>

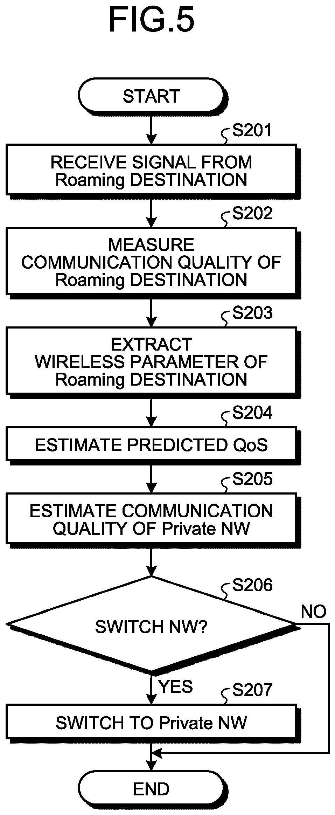

Next, the switching processing to the private network executed by the terminal device 10 will be described with reference to FIG. 5. FIG. 5 is a flowchart illustrating an example of switching processing to the private network according to the first embodiment of the present disclosure. The switching processing illustrated in FIG. 5 is periodically executed by the terminal device 10 connected to the public network (roaming destination network), for example.

As illustrated in FIG. 5, the terminal device 10 receives a signal from the roaming destination (step S201). The terminal device 10 receives a signal from the public network via the base station device 20B.

The terminal device 10 measures the communication quality based on the received signal (step S202). The terminal device 10 measures, for example, communication quality such as RSRP.

The terminal device 10 extracts the wireless parameter from the received signal (step S203). For example, the terminal device 10 extracts the wireless parameter related to the communication quality from the control information received through PDCCH, MAC CE, RRC, or NAS.

The terminal device 10 estimates the predicted QoS based on the measured communication quality and the extracted wireless parameter (step S204). For example, the terminal device 10 estimates the predicted QoS based on the communication quality and the wireless parameter.

Subsequently, the terminal device 10 performs cell search and estimates communication quality of the private network (step S205). The terminal device 10 performs cell search for the private network, and estimates the communication quality (QoS) of the private network from the wireless parameter or the like that can be acquired from the received notification information (for example, SIB1) .

The terminal device 10 determines whether or not to switch the network based on the estimated communication quality (step S206). For example, in a case where a predetermined condition is satisfied, the terminal device 10 determines to switch from the roaming destination to the private network. The predetermined condition includes, for example, at least one of satisfying the desired QoS and improving the communication quality by switching to the private network.

In a case where switching to the private network is not performed (step S206; No), the process ends. On the other hand, in a case where switching to the private network is performed (step S206; Yes), the terminal device 10 switches the connection destination to the private network (step S207), and the process ends.

### <<3. Second embodiments

In the first embodiment described above, the case where the terminal device 10 performs communication by SSSS or DSSS has been described, but the present invention is not limited thereto. For example, in a case where the terminal device 10 can be attached to a plurality of networks such as a dual SIM dual standby (DSDS), a dual SIM dual VoLTE (DSDV), or a dual SIM dual active (DSDA), switching to the roaming destination can be performed in a similar manner. Such a case will be described as the second embodiment.

### <3.1. Configuration example of terminal device>

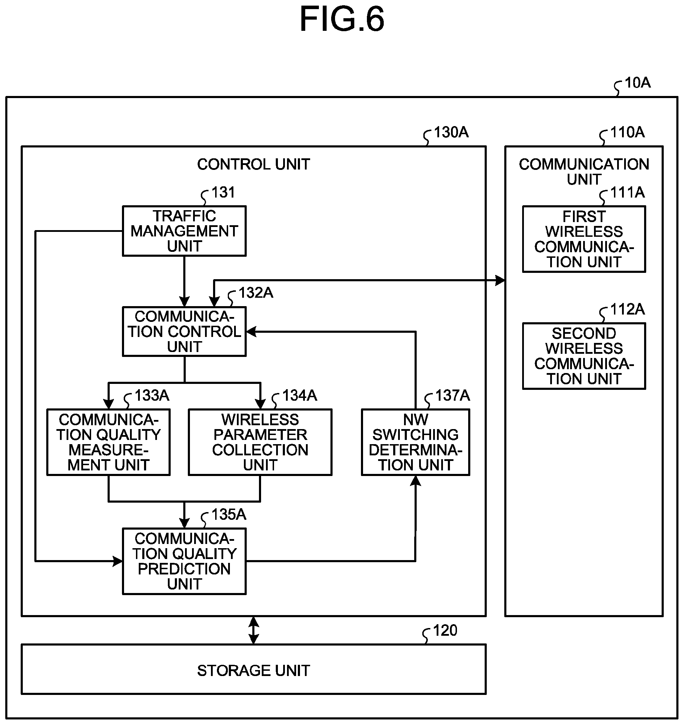

FIG. 6 is a block diagram illustrating a configuration example of a terminal device 10A according to the second embodiment of the present disclosure. The terminal device 10A illustrated in FIG. 6 has the same configuration as the terminal device 10 illustrated in FIG. 3 except for a control unit 130A. The control unit 130A includes a communication control unit 132A, a communication quality measurement unit 133A, a wireless parameter collection unit 134A, a communication quality prediction unit 135A, and an NW switching determination unit 137A, and has the same configuration as the control unit of the terminal device 10 illustrated in FIG. 3 except that the control unit 130 does not include the NW search unit 136.

As described above, the terminal device 10A can be simultaneously attached to a plurality of networks (for example, the private network and the public network). Therefore, the terminal device 10A according to the present embodiment determines whether or not to switch the connection destination among the plurality of attached networks. Therefore, in the terminal device 10A according to the present embodiment, the NW search unit 136 is omitted.

### (Communication control unit 132A)

The communication control unit 132A in FIG. 6 is connected to a plurality of networks (for example, the private network and the public network) via the communication unit 110. For example, for DSDS, the communication control unit 132A is connected to both the private network and the public network in the standby state, and receives control signals from the base station devices 20A and 20B (see FIG. 1). When performing data communication, the communication control unit 132A performs communication via either the first wireless communication unit 111 or the second wireless communication unit 112.

That is, the communication control unit 132A receives information related to the frequency (frequency band or bandwidth) of the network, notification information (for example, SIB), and signaling of RRC or NAS from each of the private network and the public network. The communication control unit 132A acquires cell information from, for example, signaling of SIB, RRC, or NAS.

In this manner, the communication control unit 132A receives a signal for transitioning from the standby state to the active state from each of the private network and the public network. The communication control unit 132A notifies the communication quality measurement unit 133A of information regarding the communication quality based on the received signal. In addition, the communication control unit 132A notifies the wireless parameter collection unit 134A of information regarding the wireless parameters based on the received signal.

### (Communication quality measurement unit 133A)

The communication quality measurement unit 133A measures the communication quality with each of the plurality of networks based on the information regarding the communication quality acquired from the communication control unit 132A. Note that the communication quality measured by the communication quality measurement unit 133A is the same as the communication quality measured by the communication quality measurement unit 133 illustrated in FIG. 3.

The communication quality measurement unit 133A outputs the measured communication quality with each of a plurality of networks to the communication quality prediction unit 135A.

### (Wireless parameter collection unit 134A)

The wireless parameter collection unit 134A collects parameter information in wireless communication with a plurality of networks performed by the communication unit 110 via the communication control unit 132A. Note that the wireless parameters collected by the wireless parameter collection unit 134A are the same as the wireless parameters collected by the wireless parameter collection unit 134 illustrated in FIG. 3.

The wireless parameter collection unit 134A outputs the collected wireless parameters of the plurality of networks to the communication quality prediction unit 135A.

### (Communication quality prediction unit 135A)

The communication quality prediction unit 135A predicts QoS (predicted QoS) after a lapse of a predetermined period from the current time for each of the plurality of networks by using the communication quality measured by the communication quality measurement unit 133A and the wireless parameters collected by the wireless parameter collection unit 134A. Note that the predicted QoS estimated by the communication quality prediction unit 135A is the same as the predicted QoS estimated by the communication quality prediction unit 135 illustrated in FIG. 3.

In addition, in a case where the terminal device 10 performs communication by connecting to a network that is preferentially connected (hereinafter also referred to as priority NW, for example, the private network), the communication quality prediction unit 135A determines whether or not the communication by the communication unit 110 satisfies the desired QoS after a lapse of a predetermined period. Note that such determination is the same as the determination by the communication quality prediction unit 135 illustrated in FIG. 3.

The communication quality prediction unit 135A notifies the NW switching determination unit 137A of the determination result.

### (NW switching determination unit 137A)

The NW switching determination unit 137A determines whether or not to switch the network of the communication destination.

For example, it is assumed that, in a case where the communication unit 110 performs communication by connecting to the priority NW (for example, the private network), the communication quality prediction unit 135A determines that the predicted QoS does not satisfy the desired QoS. In this case, the NW switching determination unit 137A determines whether or not to switch the communication destination (connection destination to perform data communication) from the priority NW to the non-priority NW (for example, the public network).

The NW switching determination unit 137A determines whether or not to switch the communication destination from the priority NW to the non-priority NW (for example, the public network) based on the predicted QoS of the non-priority NW by the communication quality prediction unit 135A. In a case where the predicted QoS of the non-priority NW satisfies the desired QoS, the NW switching determination unit 137A determines to switch the communication destination. Alternatively, in a case where it is estimated that the QoS is to be improved by switching to the non-priority NW, the NW switching determination unit 137A determines to switch the communication destination. For example, in a case where the predicted QoS of the non-priority NW is better than the predicted QoS of the priority NW, the NW switching determination unit 137A determines to switch the communication destination.

Note that, in a case where the communication unit 110 performs communication by connecting to the non-priority NW (for example, the public network), the NW switching determination unit 137A determines whether or not to return the communication destination to the priority NW (for example, the private network) based on the QoS of the priority NW, similarly to the NW switching determination unit 137 of FIG. 3.

### <3.2. Switching processing>

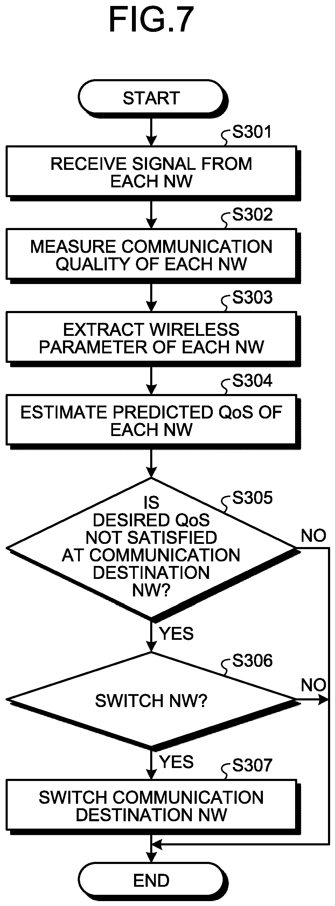

Next, switching processing to the non-priority NW executed by the terminal device 10 will be described with reference to FIG. 7. FIG. 7 is a flowchart illustrating an example of switching processing to the non-priority NW according to the second embodiment of the present disclosure. The switching processing illustrated in FIG. 7 is periodically executed by, for example, the terminal device 10 communicating with the priority NW.

As illustrated in FIG. 7, the terminal device 10 receives a signal from each NW (priority NW and non-priority NW) (step S301). The terminal device 10 receives a signal from the private network via the base station device 20A and receives a signal from the public network via the base station device 20B.

The terminal device 10 measures the communication quality of each NW based on the received signal (step S302). The terminal device 10 measures, for example, communication quality such as RSRP.

The terminal device 10 extracts a wireless parameter of each NW from the received signal (step S303). For example, the terminal device 10 extracts the wireless parameter related to the communication quality from the control information received through PDCCH, MAC CE, RRC, or NAS.

The terminal device 10 estimates the predicted QoS of each NW based on the measured communication quality of each NW and the extracted wireless parameter of each NW (step S304). For example, the terminal device 10 estimates the predicted QoS of each NW based on the communication quality and the wireless parameter of each NW.

Subsequently, the terminal device 10 determines whether or not the predicted QoS of the priority NW can satisfy the desired QoS (step S305). In a case where it is determined that the desired QoS can be satisfied (step S305; No), the process ends.

On the other hand, in a case where the desired QoS cannot be satisfied (step S305; Yes), the terminal device 10 determines whether or not to switch the communication destination based on the predicted QoS of the non-priority NW (step S306). For example, in a case where it is estimated that the predicted QoS of the non-priority NW satisfies the desired QoS, or in a case where the communication quality is to be improved by switching to the non-priority NW, the terminal device 10 determines to switch the communication destination to the non-priority NW.

In a case where the communication destination is not switched (step S306; No), the process ends. On the other hand, in a case where the communication destination is to be switched (step S306; Yes), the terminal device 10 switches the communication destination to the non-priority NW (public network) (step S307), and the process ends.

Note that, in a case where there is a plurality of non-priority NWs, the terminal device 10 repeatedly performs step S306, and switches to the non-priority NW having the highest communication quality, for example. Alternatively, the terminal device 10 may switch to the non-priority NW that has performed communication most recently among the plurality of non-priority NWs.

Note that the switching processing of switching the communication destination from the non-priority NW to the priority NW is similar to the switching processing illustrated in FIG. 5, and thus the description thereof will be omitted.

As described above, the terminal device 10A according to the second embodiment switches the communication destination from the non-priority NW to the priority NW according to the predicted QoS of the non-priority NW and the priority NW, so that the terminal device 10 can switch the connection destination from the non-priority NW to the priority NW before the actual QoS does not satisfy the desired QoS. As a result, the terminal device 10 can continuously perform communication that satisfies the desired QoS.

In addition, since the terminal device 10A according to the second embodiment can be attached to both the non-priority NW and the priority NW, switching from the non-priority NW to the priority NW can be determined without performing cell search.

Note that, here, it is assumed that the priority NW is referred to as the private network, and the non-priority NW is referred to as the public network, but the present invention is not limited thereto. For example, the non-priority NW may be another private network using a licensed band.

In addition, here, it is assumed that the terminal device 10A switches the communication destination between the priority NW and the non-priority NW, but the present invention is not limited thereto. For example, the terminal device 10A may switch a network to be preferentially connected as the connection destination among a plurality of networks.

For example, in a case where the terminal device 10A performs communication by connecting to the first and second private networks using a licensed band, it is assumed that communication is performed with the first private network as the priority NW and the second private network as the non-priority NW.

In this case, in the second embodiment described above, the terminal device 10A switches the communication destination from the first private network that is the priority NW to the second private network that is the non-priority NW according to the predicted QoS of the first private network. For example, the terminal device 10A may switch the priority NW from the first private network to the second private network according to the predicted QoS of the first private network. Note that a method of switching the priority NW from the second private network to the first private network is the same as the method of switching from the first private network to the second private network.

### <<4. Modifications>>

In each of the above-described embodiments, it is assumed that in a case where the terminal devices 10 and 10A perform data communication, communication is performed by switching to one of a plurality of networks (for example, the private network or the public network), but the present invention is not limited thereto. For example, the terminal devices 10 and 10A may perform data communication simultaneously with the plurality of networks.

In this case, the private network accommodates traffic for identifying the terminal device 10. Furthermore, for example, user data such as video data may be transmitted on either the private network or the public network based on the predicted QoS. Specifically, for example, an application server that exchanges user data with the terminal device 10 is connected to the Internet, and the terminal device 10 exchanges user data with the application server via the public network. On the other hand, the user information (or customer information) necessary for exchanging with the application server may be managed in the private network, and the terminal device 10 may exchange the user information with the private network.

Alternatively, in a case where the terminal device 10 performs data communication simultaneously with a plurality of networks, user data to be communicated may be divided based on predicted QoS in the plurality of networks, and the user data may be transmitted to each of the plurality of networks. Specifically, the terminal device 10 divides, for example, the user data into 60% and 40% according to the predicted QoS of each of the private network and the public network. For example, the terminal device 10 transmits user data divided into 60% through the private network, and transmits user data divided into 40% through the public network.

Note that, here, it is assumed that a plurality of networks capable of simultaneously performing data communication are the private network and the public network, but the networks are not limited thereto. For example, as described above, the plurality of networks may be the plurality of private networks (for example, first and second private networks) using a licensed band.

Furthermore, in each of the embodiments described above, it is assumed that the terminal devices 10 and 10A measure the communication quality from the received signal and collect the wireless parameters, but the present invention is not limited thereto. For example, the terminal devices 10 and 10A may acquire information to be used for predicted QoS calculation from the Network. Such information includes, for example, information such as the number of terminal devices 10 accommodated by the base station device 20, a downlink or uplink traffic volume, a delay time, and the like.

Furthermore, in the second embodiment described above, it is assumed that the terminal device 10A acquires the cell information from signaling such as RRC or NAS via the base station device 20, but the present invention is not limited thereto. The terminal device 10A may acquire information such as information regarding whether or not CA is permitted and application information of dynamic spectrum sharing (DSS) as the band information from signaling such as RRC or NAS. Furthermore, in a case where the terminal device 10A is connected to the network by 4G, the terminal device 10A may acquire information indicating whether or not 5G can be used in NAS from signaling such as RRC or NAS. Note that these information may be included in signaling such as RRC or NAS by the terminal device 10A, or may be notified from the network separately from the signaling.

### <<5. Conclusion>>

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

The control device that controls the terminal devices 10 and 10A of the present embodiment may be implemented by a dedicated computer system or may be implemented by a general-purpose computer system.

For example, a communication program for executing the above-described operation is stored and distributed in a computer-readable recording medium such as an optical disk, a semiconductor memory, a magnetic tape, or a flexible disk. Then, for example, the program is installed in a computer, and the above-described processing is executed to configure the control device. At this time, the control device may be a device (for example, a personal computer) outside the communication devices 100 and 100A to 100C and a terminal devices 200 and 200B. Furthermore, the control device may be a device (for example, the control units 130 and 130A) inside the terminal devices 10 and 10A.

In addition, the communication program may be stored in a disk device included in a server device on a network such as the Internet so that the communication program can be downloaded to a computer. In addition, the above-described functions may be implemented by cooperation of an operating system (OS) and application software. In this case, a portion other than the OS may be stored in a medium and distributed, or a portion other than the OS may be stored in a server device and, for example, downloaded to a computer.

Among the processing described in the above embodiments, all or a part of the processing described as being performed automatically can be performed manually, or all or a part of the processes described as being performed manually can be performed automatically by a known method. In addition, the processing procedure, specific name, and information including various data and parameters illustrated in the document and the drawings can be arbitrarily changed unless otherwise specified. For example, the various types of information illustrated in each figure are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (i.e., a configuration of a part of the device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

Note that the effects of the embodiments described in the present specification are merely examples and are not limited, and other effects may be provided.

Note that the present technology can also have the following configurations.
(1) A wireless communication device comprising:
   a first wireless communication unit that performs communication by connecting to a first communication network that permits connection in a predetermined area;
   a second wireless communication unit performs communication by connecting to a second communication network different from the first communication network; and
   a control unit that predicts communication quality of communication by the first wireless communication unit, and determines whether or not to perform communication by the second wireless communication unit based on whether or not the predicted communication quality satisfies a desired communication quality.
(2) The wireless communication device according to (1), wherein the control unit determines whether or not to switch communication by the first wireless communication unit to communication by the second wireless communication unit depending on whether or not the communication quality of communication by the second wireless communication unit satisfies a predetermined condition, in a case where communication is performed by the first wireless communication unit.
(3) The wireless communication device according to (2), wherein the control unit calculates the communication quality of communication by the second wireless communication unit based on at least one of a cell search result by the second wireless communication unit and notification information.
(4) The wireless communication device according to (2), wherein the control unit calculates the communication quality of communication by the second wireless communication unit based on control information received by the second wireless communication unit.
(5) The wireless communication device according to any one of (1) to (4), wherein the control unit determines whether or not to switch communication by the second wireless communication unit to communication by the first wireless communication unit depending on whether or not the communication quality of communication by the first wireless communication unit satisfies a predetermined condition, in a case where communication is performed by the second wireless communication unit.
(6) The wireless communication device according to (1), wherein the control unit transmits part of transmission data via the second wireless communication unit, and transmits remaining transmission data via the first wireless communication unit, in a case of determining to perform communication by the second wireless communication unit.
(7) The wireless communication device according to any one of (1) to (6), wherein the second communication network is a public network.
(8) The wireless communication device according to any one of (1) to (6), wherein the second communication network is a network that permits connection in an area same as or different from the predetermined area.
(9) A communication method comprising:
   performing communication by connecting to a first communication network that permits connection in a predetermined area;
   performing communication by connecting to a second communication network different from the first communication network;
   predicting communication quality of communication performed by connecting to the first communication network, and determining whether or not to perform communication by connecting to the second communication network based on whether or not the predicted communication quality satisfies a desired communication quality.

### Reference Signs List

1 COMMUNICATION SYSTEM
10, 10A TERMINAL DEVICE
20A, 20B BASE STATION DEVICE
110 COMMUNICATION UNIT
111 FIRST WIRELESS COMMUNICATION UNIT
112 SECOND WIRELESS COMMUNICATION UNIT
120 STORAGE UNIT
130, 130A CONTROL UNIT
131 TRAFFIC MANAGEMENT UNIT
132, 132A COMMUNICATION CONTROL UNIT
133, 133A COMMUNICATION QUALITY MEASUREMENT UNIT
134, 134A WIRELESS PARAMETER COLLECTION UNIT
135, 135A COMMUNICATION QUALITY PREDICTION UNIT
136 NW SEARCH UNIT
137, 137A NW SWITCHING DETERMINATION UNIT

## Claims

1. A wireless communication device comprising:
a first wireless communication unit that performs communication by connecting to a first communication network that permits connection in a predetermined area;
a second wireless communication unit performs communication by connecting to a second communication network different from the first communication network; and
a control unit that predicts communication quality of communication by the first wireless communication unit, and determines whether or not to perform communication by the second wireless communication unit based on whether or not the predicted communication quality satisfies a desired communication quality.

2. The wireless communication device according to claim 1, wherein the control unit determines whether or not to switch communication by the first wireless communication unit to communication by the second wireless communication unit depending on whether or not the communication quality of communication by the second wireless communication unit satisfies a predetermined condition, in a case where communication is performed by the first wireless communication unit.

3. The wireless communication device according to claim 2, wherein the control unit calculates the communication quality of communication by the second wireless communication unit based on at least one of a cell search result by the second wireless communication unit and notification information.

4. The wireless communication device according to claim 2, wherein the control unit calculates the communication quality of communication by the second wireless communication unit based on control information received by the second wireless communication unit.

5. The wireless communication device according to claim 1, wherein the control unit determines whether or not to switch communication by the second wireless communication unit to communication by the first wireless communication unit depending on whether or not the communication quality of communication by the first wireless communication unit satisfies a predetermined condition, in a case where communication is performed by the second wireless communication unit.

6. The wireless communication device according to claim 1, wherein the control unit transmits part of transmission data via the second wireless communication unit, and transmits remaining transmission data via the first wireless communication unit, in a case of determining to perform communication by the second wireless communication unit.

7. The wireless communication device according to claim 1, wherein the second communication network is a public network.

8. The wireless communication device according to claim 1, wherein the second communication network is a network that permits connection in an area same as or different from the predetermined area.

9. A communication method comprising:
performing communication by connecting to a first communication network that permits connection in a predetermined area;
performing communication by connecting to a second communication network different from the first communication network;
predicting communication quality of communication performed by connecting to the first communication network, and determining whether or not to perform communication by connecting to the second communication network based on whether or not the predicted communication quality satisfies a desired communication quality.
